Europäisches Patentamt

European Patent Office

Office européen des brevets

(19)

(11) Numéro de publication: **0 302 790**
**A1**

(12) **DEMANDE DE BREVET EUROPEEN**

(21) Numéro de dépôt: **88402029.8**

(22) Date de dépôt: **03.08.88**

(51) Int. Cl.⁴: **C 10 G 47/12**
**B 01 J 29/02**

(30) Priorité: **07.08.87 FR 8711302**

(43) Date de publication de la demande:
**08.02.89 Bulletin 89/06**

(84) Etats contractants désignés:
**BE DE ES FR GB GR IT NL SE**

(71) Demandeur: **COMPAGNIE DE RAFFINAGE ET DE DISTRIBUTION TOTAL FRANCE: Société Anonyme dite**
**5, rue Michel Ange**
**F-75781 Paris Cédex 16 (FR)**

(72) Inventeur: **Borg, Françoise**
**Rue de l'Abbaye**
**F-27170 Beaumontel (FR)**

**Maroy, Pierre**
**18, Rue du Parc de Clagny**
**F-78000 Versailles (FR)**

(74) Mandataire: **Jolly, Jean-Pierre et al**
**Cabinet BROT et JOLLY 83, rue d'Amsterdam**
**F-75008 Paris (FR)**

(54) Catalyseurs d'hydrocraquage de charges hydrocarbonées et application desdits catalyseurs.

(57) L'invention concerne des catalyseurs d'hydrocraquage de charges hydrocarbonées.

Ces catalyseurs comprennent :

A.- un support constitué au moins en partie par une zéolite à structure bidimensionnelle ;

B.- sous forme libre ou combinée, calculé en élément, de 1,5 à 7,5 % en poids et, de préférence, de 2,3 % à 6 % en poids, rapporté au poids total du catalyseur, d'au moins un métal du groupe VIII de la classification périodique des éléments ;

C.- sous forme libre ou combinée, calculé en élément, de 5 à 16 % en poids et, de préférence, de 6,5 à 13 % en poids, rapporté au poids total du catalyseur, d'au moins un métal du groupe VIA de la classification périodique des éléments.

EP 0 302 790 A1

## Description

**Catalyseurs d'hydrocraquage de charges hydrocarbonées et application desdits catalyseurs.**

La présente invention concerne des catalyseurs d'hydrocraquage de charges hydrocarbonées et l'application desdits catalyseurs.

L'hydrocraquage est un procédé bien connu de l'industrie pétrolière. En particulier, il permet à partir de charges hydrocarbonées lourdes, non utilisables en l'état, d'obtenir des fractions plus légères, valorisables comme carburants, en particulier comme gazoles et carburéacteurs.

Les catalyseurs utilisés dans le procédé d'hydrocraquage sont constitués de façon connue par un support ayant une fonction acide, support associé à un ou plusieurs métaux des groupes VIII et VIA de la classification périodique, métaux ayant une fonction hydrogènante, notamment le nickel associé au molybdène.

On a notamment utilisé, en tant que support de catalyseur d'hydrocraquage, comme décrit dans le brevet français N° 2 571 982, des argiles pontées. Concernant les argiles et les argiles pontées, on pourra se référer pour une meilleure compréhension de l'invention et ceci dans le but d'alléger la présente description, à la demande de brevet européen N° 163 560, dont la Demanderesse est titulaire.

On rappellera ci-après simplement les principales définitions concernant les argiles et les argiles pontées.

Certaines argiles ont une structure gonflante. Elles ont la propriété de pouvoir adsorber, de l'eau notamment, entre les différents feuillets qui les composent. C'est le cas, en particulier, des argiles du groupe des smectites. Ces argiles ont une structure que l'on peut représenter, d'une manière simplifiée, comme composée de feuillets à couches triples, comportant deux couches de tétraèdres $SiO_4$ et une couche intermédiaire dioctaédrique ou trioctaédrique, ces octaèdres ayant pour formule M $X_6$, M pouvant être un ion trivalent (argile dioctaédrique) ou divalent (argile trioctaédrique) avec X = O ou OH.

La cohésion entre les couches est assurée par la mise en commun d'atomes d'oxygène apicaux. Les atomes de silicium des tétraèdres peuvent être remplacés en partie par des atomes d'aluminium. C'est le cas, notamment, dans la beidellite.

De la même façon, dans les octaèdres de la couche intermédiaire, les atomes d'aluminium peuvent être remplacés en partie par des atomes de magnésium ou de fer, dans le cas des smectites dioctaédriques; dans les smectites trioctaédriques, les atomes de magnésium de la couche intermédiaire peuvent être remplacés en partie par des atomes de fer et de lithium.

Il est bien connu que la surface spécifique d'un support a une très grande importance en catalyse et ces argiles, du fait de leur propriété d'être expansibles, pourraient être utilisées comme catalyseurs ou supports de catalyseurs, notamment pour la conversion d'hydrocarbures. Mais, une fois expansées, c'est-à-dire après adsorption de l'eau entre leurs différents feuillets, ces argiles ont l'inconvénient de perdre leur caractère expansé par chauffage à 100°C, et, de ce fait, de ne pas conserver l'augmentation de surface spécifique pouvant résulter de leur expansion.

L'état d'expansion d'une argile est défini par l'espacement interfoliaire et l'espacement basal, qui sont mesurés par diffraction de rayons X.

L'espacement interfoliaire est, comme son nom l'indique, l'espacement entre deux feuillets. A l'état non expansé, après élimination de l'eau de l'argile, il est donc nul.

L'espacement basal, représenté par le sigle $d_{001}$, est défini comme la somme de l'épaisseur d'un feuillet et de l'espacement interfoliaire.

Dans le cadre d'une smectite, l'épaisseur d'un feuillet est de $9,6.10^{-10}$ mètre . A l'état expansé, l'espacement interfoliaire peut dépasser environ $10.10^{-10}$ mètre et l'espacement basal peut donc dépasser environ $20.10^{-10}$ mètre .

On a cherché, dans le but notamment d'utiliser les argiles expansibles comme supports de catalyseurs ou comme catalyseurs, à obtenir des argiles ayant un espacement basal aussi élevé que possible, cet espacement basal pouvant être maintenu quand l'argile est soumise à un traitement thermique.

On a ainsi réussi à introduire entre les feuillets d'argile des piliers ou ponts pour obtenir des argiles qui seront désignées, dans la suite de la présente description, par le terme "argiles pontées".

Une méthode bien connue consiste à introduire entre les feuillets d'argile, des ponts constitués par des oligomères d'un hydroxyde d'un métal et, notamment, d'un hydroxyde d'aluminium.

Cette méthode, notamment décrite dans l'article de MM. LAHAV, U. SHANI et J. SHABTAI, paru dans CLAYS AND CLAYS MINERAL, Volume 26, n° 2, pages 107 à 115 (1978), consiste à mettre en contact un oligomère d'hydroxyde d'aluminium avec une suspension aqueuse diluée de montmorillonite.

La montmorillonite séparée du mélange est ensuite lavée par de l'eau.

Une autre méthode, décrite dans le brevet français N° 2 512 043, consiste à préparer également un mélange d'une suspension aqueuse d'argile et d'un oligomère d'hydroxyde d'aluminium, notamment, et ensuite à dialyser ce mélange. Les argiles pontées ainsi obtenues sont utilisées comme catalyseurs ou supports de catalyseurs.

Une autre méthode, décrite dans le brevet français N° 2 394 324, consiste à mettre en contact l'argile, notamment une beidellite, avec une solution de chlorohydroxyde d'aluminium appelé "chlorhydrol", mais la beidellite est ensuite simplement séchée à l'étuve. Les argiles pontées ainsi préparées peuvent servir de catalyseurs de conversion de charges d'hydrocarbures.

La Demanderesse avait précédemment découvert (voir demande de brevet européen N° 163 560) que l'on pouvait préparer des produits d'une structure particulière à partir d'argiles comportant des substitutions en couche tétraèdrique. Par "substitutions en couche tétraèdrique", on entend que des atomes de silicium sont remplacés par des atomes d'aluminium. Cette préparation a été rendue possible en faisant suivre la préparation d'une beidellite pontée, dans des conditions connues en soi, par un traitement thermique à une température de 250 à 450°C. La structure particulière de ce produit est déterminée grâce à l'analyse par résonance magnétique nucléaire à haute résolution. Pour le différencier des beidellites pontées précédemment décrites, la Demanderesse l'a appelé zéolite à structure bidimensionnelle. La nature différente de ce produit, par rapport aux argiles à substitution en couche octaèdrique pontées déjà connues, est confirmée par des propriétés catalytiques meilleures.

La demande de brevet européen N° 163 560 susmentionnée décrit l'utilisation d'une argile particulière pontée, la beidellite pontée, comme support de catalyseur d'hydrocraquage. L'utilisation de nickel et de molybdène associés à la beidellite pontée n'est toutefois pas décrite.

Le brevet français N° 2 571 982 décrit un catalyseur d'hydrocraquage dont le support est constitué par le mélange d'une zéolite et d'une argile pontée obtenue à partir d'une smectite, groupe dont fait partie la beidellite, et dont des métaux à fonction hydrogénante sont le nickel et le molybdène. Ce brevet ne décrit toutefois pas d'exemple de catalyseur dont le support est de la beidellite pontée.

La Demanderesse a maintenant établi que des catalyseurs dont le support est de la beidellite pontée sont de très bons catalyseurs d'hydrocraquage produisant des quantités accrues d'essence et de gazole.

Le but de la présente invention est donc la mise au point de catalyseurs d'hydrocraquage de charges hydrocarbonées.

A cet effet, l'invention a pour objet des catalyseurs d'hydrocraquage de charges hydrocarbonées, lesdits catalyseurs étant caractérisés en ce qu'ils comprennent:

A.- un support constitué au moins en partie par une zéolite à structure bidimensionnelle obtenue par un procédé comportant les étapes suivantes :

a) le traitement d'une argile comportant des substitutions en couche tétraèdrique, sous forme d'une suspension aqueuse, par une solution aqueuse contenant au moins un hydroxyde d'au moins un métal,

b) l'élimination de l'excès de l'hydroxyde du métal n'ayant pas réagi sur l'argile, ladite élimination conduisant, après séchage de l'argile traitée, à l'obtention d'un précurseur de la zéolite,

c) le traitement thermique à une température comprise entre 250 et 550°C du précurseur de la zéolite, ledit traitement conduisant à l'obtention de la zéolite à structure bidimensionnelle.

B.- Sous forme libre ou combinée, calculé en élément, de 1,5 à 7,5% en poids et, de préférence, de 2,3 à 6% en poids, rapporté au poids total du catalyseur, d'au moins un métal du groupe VIII de la classification périodique des éléments.

C.- Sous forme libre ou combinée, calculé en élément, de 5 à 16% en poids et, de préférence, de 6,5 à 13 % en poids, rapporté au poids total du catalyseur, d'au moins un métal du groupe VIA de la classification périodique des éléments.

Pour l'obtention et la caractérisation de la zéolite à structure bidimensionnelle qui constitue le support des catalyseurs selon l'invention, on pourra se reporter à la demande de brevet européen N° 163 560 précédemment citée.

Ledit support peut avoir une surface comprise entre 50 et 500 m$^2$/g et de préférence entre 150 et 400 m$^2$/g.

L'espacement basal dudit support peut être supérieur à 16.10$^{-10}$ mètre et, de préférence, supérieur à 18.10$^{-10}$ mètre.

Les catalyseurs selon l'invention peuvent contenir, calculé en élément, de 1,5 à 7, 5 % en poids et, de préférence, de 2,3 à 6 % en poids rapporté au poids total du catalyseur, d'au moins un métal du groupe VIII de la classification périodique des éléments.

Ils peuvent contenir, également calculé en élément, de 5 à 16 % en poids et, de préférence, de 6,5 à 13 % en poids rapporté au poids total du catalyseur, d'au moins un métal du groupe VIA de la classification périodique des éléments.

La Demanderesse a notamment utilisé avec succès un catalyseur contenant du nickel et du molybdène.

Les métaux peuvent être déposés sur le support par au moins une imprégnation dudit support par au moins une solution contenant les métaux des groupes VIII et VIA. Le dépôt des métaux peut également être effectué par deux (ou plus de deux) imprégnations successives.

Après imprégnation, le support peut être séché à 120°C environ, puis peut être calciné à une température comprise entre 250°C et 450°C.

D'autres supports, comme l'alumine ou la zéolite Y, peuvent être employés en combinaison avec la zéolite à structure bidimensionnelle.

Les catalyseurs selon l'invention peuvent être utilisés pour l'hydrocraquage de charges hydrocarbonées, notamment de charges hydrocarbonées lourdes, telle que des gazoles obtenus par distillation sous pression réduite, ou des résidus, ces charges étant constituées, au moins à 50 % en poids, de composés dont le point d'ébullition est supérieur à 350°C.

Ces charges sont constituées en majorité par des hydrocarbures, mais contiennent également des molécules contenant des hétéroatomes, comme le soufre ou l'azote.

Les conditions opératoires qui peuvent être utilisées dans le procédé d'hydrocraquage sont les suivantes :
- température supérieure à 200°C et, de préférence, comprise entre 300 et 500°C ;

**0 302 790**

- pression supérieure à 15 Mégapascal et, de préférence, comprise entre 30 et 120 Mégapascal ;
- vitesse volumique horaire comprise entre 0,5 et 10 ;
- rapport volumique hydrogène/charge compris entre 200 et 3000 normaux-litres/litre.
  Les exemples qui suivent sont destinés à illustrer l'invention. Ils n'ont pas de caractère limitatif.

## EXEMPLE 1

Cet exemple concerne des essais d'hydrocraquage de normal heptane, à l'aide:
- d'un catalyseur A selon l'invention, préparé à partir d'une beidellite, argile comportant des substitions en couche tétraèdrique.
- d'un catalyseur témoin T, préparé à partir d'une bentonite, argile comportant des substitutions en couche octaèdrique.

## PREPARATION DES CATALYSEURS

La beidellite est une beidellite synthétique préparée selon le mode décrit dans la demande de brevet européen N° 163 560 précitée. La bentonite est une bentonite naturelle.

La beidellite et la bentonite sont pontées de façon connue par échange des cations sodium localisés entre les feuillets par des cations aluminium, à l'aide d'un hydrosol d'aluminium obtenu en ajoutant de la soude à du chlorure d'aluminium.

L'échange s'effectue à la température ambiante.

Après lavage, les argiles pontées sont extrudées, séchées 16 heures à 120°C, puis calcinées pendant 2 heures à 350°C.

On imprègne ensuite les supports ainsi obtenus par des solutions aqueuses de nitrate de nickel et d'heptamolybdate d'ammonium, de telle façon que les catalyseurs finaux calcinés à 350°C pendant 2 heures contiennent 6% en poids d'oxyde de nickel NiO et 12,8% en poids d'oxyde de molybdène $MoO_3$.

## ESSAIS D'HYDROCRAQUAGE

On a effectué des essais d'hydrocraquage du normal heptane avec les catalyseurs A et T. Les conditions opératoires sont les suivantes:
- Pression : 6 Mégapascal,
- Rapport volumique hydrogène/normal heptane : 670,
- Vitesse volumique horaire : 2.

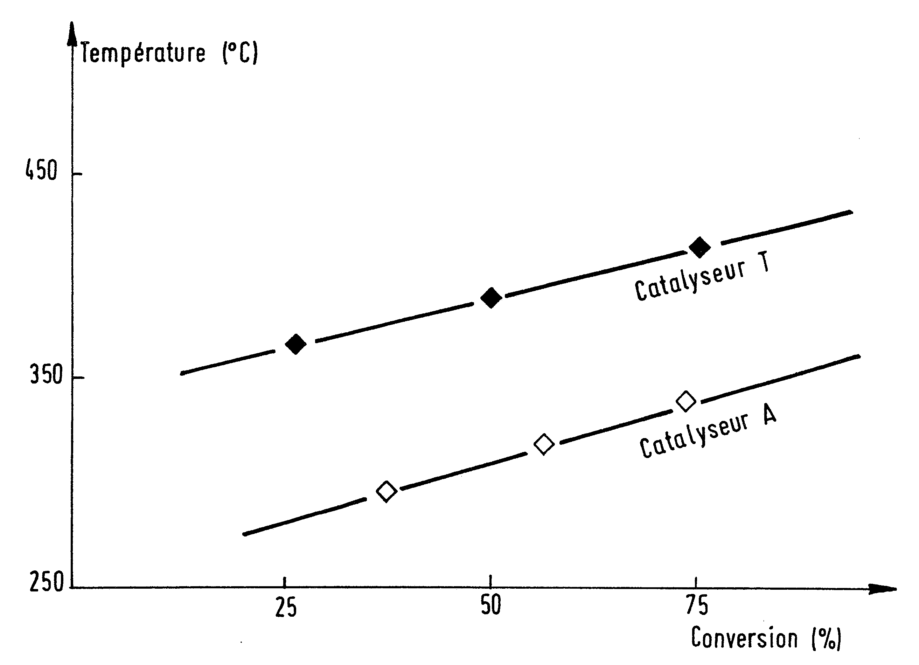

On a effectué des essais à différentes températures. On a tracé les courbes de la conversion en fonction de la température, courbes qui sont représentées sur la figure unique jointe à la présente description.

On constate, d'après la figure, qu'on obtient avec le catalyseur selon l'invention la même conversion qu'avec le catalyseur-témoin, à une température plus basse, ce qui montre la supériorité du catalyseur selon l'invention.

## EXEMPLE 2

Cet exemple concerne un essai d'hydrocraquage d'une charge hydrocarbonée lourde à l'aide du catalyseur A selon l'invention, décrit dans l'Exemple 1.

La charge est une coupe obtenue par distillation sous pression réduite d'un résidu de distillation sous pression atmosphérique d'un pétrole brut. Ses caractéristiques sont données ci-après.

4

- Distillation selon norme AFNOR NF M 07-002     % en poids
    - fraction bouillant en dessous de 160°C:     1,26,
    - fraction bouillant de 160 à 370°C:          23,09,
    - fraction bouillant de 370 à 520°C:          75,65,
    - point final: 520°C,
- Soufre (par fluorescence UV) :                  20 p.p.m,
- Azote total (par chimiluminescence) :            2 p.p.m.

Avant l'essai proprement dit, le catalyseur est présulfuré par un gazole contenant 1% en poids de diméthyldisulfure.

L'essai proprement dit est effectué dans les conditions suivantes:
- pression totale:   9,5 Mégapascal,
- rapport hydrogène/charge:   1000 normaux litres/litre,
- vitesse volumique horaire:   1,
- température:   350°C

L'effluent est analysé en quatre fractions:

(1) Gaz:         point d'ébullition final
                 inférieur à 20°C:          0%,

(2) Essence:     point d'ébullition initial
                 20°C/point d'ébullition
                 final 160°C:               48% en poids,

(3) Gazole:      point d'ébullition initial
                 160°C/point d'ébullition
                 final 370°C:               41% en poids,

(4) Fraction
    370°C⁺:      point d'ébullition initial
                 370°C:                     11% en poids,

$$\text{Conversion en fraction } 370°C = \frac{\% \text{ fraction } 370°C^+ - \% \text{ fraction } 370°C^+ \text{ effluent total}}{\% \text{ fraction } 370°C^+ \text{ charge}} = 85,4\% \text{ en poids}$$

Ces résultats montrent que le catalyseur selon l'invention est un bon catalyseur d'hydrocraquage de coupes lourdes. En particulier, il ne produit pas de gaz, produit peu intéressant par rapport à l'essence et au gazole.

**Revendications**

1.- Catalyseurs d'hydrocraquage de charges hydrocarbonées, lesdits catalyseurs étant caractérisés en ce qu'ils comprennent:

    A.- un support constitué au moins en partie par une zéolite à structure bidimensionnelle obtenue par un procédé comportant les étapes suivantes :

    a) le traitement d'une argile comportant des substitutions en couche tétraèdrique, sous forme d'une suspension aqueuse, par une solution aqueuse contenant au moins un hydroxyde d'au moins un métal,

b) l'élimination de l'excès de l'hydroxyde du métal n'ayant pas réagi sur l'argile, ladite élimination conduisant, après séchage de l'argile traitée, à l'obtention d'un précurseur de la zéolite.

c) le traitement thermique à une température comprise entre 250 et 550°C, du précurseur de la zéolite, ledit traitement conduisant à l'obtention de la zéolite à structure bidimensionnelle.

B.- sous forme libre ou combinée, calculé en élément, de 1,5 à 7,5% en poids et, de préférence, de 2,3 à 6% en poids, rapporté au poids total du catalyseur, d'au moins un métal du groupe VIII de la classification périodique des éléments.

C.- sous forme libre ou combinée, calculé en élément, de 5 à 16% en poids et, de préférence, de 6,5 à 13% en poids, rapporté au poids total du catalyseur, d'au moins un métal du groupe VIA de la classification périodique des éléments.

2.- Catalyseurs selon la revendication 1, caractérisés en ce que le support a une surface comprise entre 50 et 500 m²/g et, de préférence, entre 150 et 400 m²/g et un espacement basal supérieur à $16.10^{-10}$ mètre et, de préférence, supérieur à $18.10^{-10}$ mètre.

3.- Catalyseurs selon l'une des revendications 1 et 2, caractérisés en ce que le métal du groupe VIII est le nickel et le métal du groupe VIA est le molybdène.

4.- Application des catalyseurs selon l'une des revendications 1 à 3 à l'hydrocraquage de charges hydrocarbonées, notamment de charges hydrocarbonées lourdes constituées, au moins à 50% en poids, de composés dont le point d'ébullition est supérieur à 350°C.

450 — 350 — 250

Température (°C)

Catalyseur T

Catalyseur A

Conversion (%)

25    50    75

0302790

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 060 480 (REED et al.)<br>* Revendications 1-10; colonne 1, lignes 55-68; colonne 2, lignes 45-47; colonne 1, lignes 17-22 *<br>--- | 1-4 | C 10 G 47/12<br>B 01 J 29/02 |
| D,Y | EP-A-0 163 560 (COMPAGNIE FRANCAISE DE RAFFINAGE)<br>* Revendications 1-9; page 17; page 10, lignes 7-11 *<br>--- | 1-4 | |
| D,A | FR-A-2 394 324 (GRACE)<br>* Revendications 1-16; page 3, ligne 12 - page 4, ligne 10; page 8, ligne 30 - page 9, ligne 6 *<br>--- | 1-4 | |
| D,A | FR-A-2 571 982 (IFP)<br>* Revendications *<br>--- | 1-4 | |
| A | EP-A-0 202 158 (IFP)<br>* Revendications 1-10 *<br>--- | 1-4 | |
| A | US-A-4 216 188 (SHABRIA et al.)<br>* Revendications 1-6,8-15 *<br>----- | 1-2 | DOMAINES TECHNIQUES RECHERCHES (Int. Cl.4)<br><br>B 01 J |

Le présent rapport a été établi pour toutes les revendications

| Lieu de la recherche | Date d'achèvement de la recherche | Examinateur |
|---|---|---|
| LA HAYE | 20-09-1988 | MICHIELS P. |